# EUROPÄISCHE PATENTSCHRIFT

(11) **EP 1 951 763 B1**
(45) Veröffentlichungstag und Bekanntmachung des Hinweises auf die Patenterteilung: **14.01.2009**
(21) Anmeldenummer: 06806628.1
(22) Anmeldetag: 31.10.2006
(51) Int. Cl.: C08C 19/02, C08F 136/06, C08C 19/20, C08L 9/00

(54) **SCHWEFELVERNETZTE HYDRIERTE VINYLPOLYBUTADIENE SOWIE DEREN VERWENDUNG ZUR HERSTELLUNG VON TECHNISCHEN GUMMIARTIKELN MIT GUTEM RÜCKVERFORMUNGSVERHALTEN ÜBER EINEN BREITEN TEMPERATURBEREICH**
SULFUR-CROSSLINKED HYDROGENATED VINYL POLYBUTADIENES, AND USE THEREOF FOR THE PRODUCTION OF TECHNICAL RUBBER ARTICLES HAVING GOOD RECOVERY BEHAVIOR ACROSS A LARGE TEMPERATURE RANGE
VINYLPOLYBUTADIENES HYDROGENES RETICULES AU SOUFRE ET UTILISATION DANS LA FABRICATION D'ARTICLES EN CAOUTCHOUC TECHNIQUES PRESENTANT DE BONNES PROPRIETES ELASTIQUES SUR UNE GRANDE GAMME DE TEMPERATURES

(30) Priorität: 12.11.2005 DE 102005054091
(43) Veröffentlichungstag der Anmeldung: 06.08.2008
(73) Patentinhaber: LANXESS Deutschland GmbH, 51369 Leverkusen (DE)
(72) Erfinder: BISCHOFF, Andreas, 41541 Dormagen (DE); OBRECHT, Werner, 47447 Moers (DE)
(86) Internationale Anmeldenummer: PCT/EP2006/010457
(87) Internationale Veröffentlichungsnummer: WO 2007/054228

(56) Entgegenhaltungen:
- EP-A- 0 471 250
- EP-A- 1 770 103
- DE-A1- 4 128 869
- US-A- 4 310 582
- US-A- 4 965 323
- US-A1- 2004 242 797

## Beschreibung

Gegenstand der vorliegenden Erfindung sind schwefelvernetzte hydrierte Vinylpolybutadiene, die zur Herstellung von technischen Gummiartikeln und Reifenbauteilen dienen und ein sehr gutes Rückverformungsverhalten über einen breiten Temperaturbereich besitzen.

Es ist weithin bekannt, dass Kautschuke zur Erzielung technisch gewünschter elastischer Eigenschaften einer chemischen Vernetzung unterworfen werden müssen. Das geschieht beispielsweise bei der Herstellung technischer Gummiartikel sowie bei der Herstellung von Reifen. Diese Artikel müssen nicht nur eine hohe Formbeständigkeit auch bei hohen Einsatztemperaturen, sondern auch ein gutes Rückformverhalten unter statischer und dynamischer Belastung aufweisen. Das elastische Rückformverhalten der so hergestellten Artikel muss im Allgemeinen über einen breiten Temperaturbereich gewährleistet sein.

Zur Herstellung von Gummiartikeln mit gutem Rückverformungsverhalten und gleichzeitig guter Alterungsbeständigkeit finden z. B. EPDM-Kautschuke (das sind Polymere auf Basis von Ethylen/Propylen-Polymerisaten) breite technische Verwendung, daraus werden beispielsweise Schläuche, Dichtungen aller Art, Profile, Feder- und Faltenbälge, Lager und Dämpfungselemente, Riemen, Kupplungen, Beschichtungen, Platten und Beläge, Sohlen, Kabelummantelungen, Membranen, Reifenbauteile, Förderbänder sowie Verbundkörper aus Gummi/ Metall, Gummi/ Kunststoff und Gummi/ Textil hergestellt.

Die Vernetzung von EPDM-Kautschuk kann u. a. erfolgen durch Zusatz von Peroxiden, Zusatz von Schwefel - vorzugsweise in Kombination mit geeigneten Beschleunigersystemen - sowie durch Einsatz energiereicher Strahlung. Die Bedingungen der Vulkanisation sowie die Art und Menge des jeweiligen Vernetzers müssen dabei so gewählt werden, dass tatsächlich das durch den jeweiligen Einsatzzweck vorgegebene elastische Rückverformungsverhalten erreicht werden kann. Dazu müssen die Rückstellkräfte der Vulkanisate nach Kompression oder Schubverformung auch nach längerer Exposition möglichst hoch bzw. die bleibenden Verformungen nach Kompression oder Schubverformung müssen möglichst niedrig sein. Die in diesem Zusammenhang relevanten Messgrößen sind der Druckverformungsrest oder Compression-Set nach DIN 53517 A sowie die Druckspannungsrelaxation nach DIN 53537.

Aufgrund der weiter fortschreitenden technischen Entwicklung in den genannten Einsatzgebieten ist ein verbessertes Rückverformungsverhalten der eingesetzten Gummiartikel in einem breiten Temperaturbereich wünschenswert.

In P 001 00086 wird beschrieben, dass Vulkanisate auf der Basis von hydrierten Vinylpolybutadienen ein solches Eigenschaftsprofil aufweisen, wenn sie unter Einsatz von Peroxiden vernetzt werden. Eine Vernetzung von hydrierten Vinylpolybutadienen durch Einsatz von Schwefel wird in P 001 00086 nicht beschrieben.

Aufgabe der vorliegenden Erfindung war es daher, eine geeignete Auswahl von hydrierten Vinylpolybutadienen zu treffen mit denen mittels einer geeigneten Schwefel/Beschleuniger-Kombination die Einstellung eines bestimmten Niveaus kautschuktechnologischer Eigenschaften wie Härte, Elastizität, Spannungswerte bei verschiedenen Dehnungen, Reißfestigkeit, Reißdehnung sowie bestimmte Compression-Set-Werte möglich ist, so dass wichtige für den technischen Gebrauch spezifizierte Eigenschaften, insbesondere ein gutes Rückverformungsverhalten, erfüllt werden können.

Überraschenderweise hat sich nun gezeigt, dass hydrierte Vinylpolybutadiene auch unter den Bedingungen einer Schwefelvernetzung ein günstigeres elastisches Rückverformungsverhalten aufweisen, insbesondere im Vergleich zu EP(D)M-Vulkanisaten und Gummiartikeln sonst gleicher Zusammensetzung und Vorbehandlung.

Gegenstand der vorliegenden Erfindung sind daher schwefelvernetzte hydrierte Vinylpolybutadiene, die dadurch gekennzeichnet sind, dass sie Compression-Set-Werte aufweisen im Bereich von

| | | |
|---|---|---|
| a) | 1 bis 4,3 | bei 23°C/70 h, |
| b) | 2 bis 22 | bei 70°C/70 h |
| c) | 5 bis 60 | bei 100°C/70 h |
| d) | 8 bis 70 | bei 125°C/70 h und |
| e) | 10 bis 78 | bei 150°C/70 h |

sowie Druckspannungsrelaxationswerte im Bereich von

| | | |
|---|---|---|
| f) | 2 bis 8,6 | bei 23°C/168 h. |

Bevorzugt sind schwefelvernetzte hydrierte Polybutadiene, die Compression-Set-Werte aufweisen im Bereich von

| | | |
|---|---|---|
| a) | 1 bis 4,3 | bei 23°C/70 h, |
| b) | 2 bis 22 | bei 70°C/70 h |
| c) | 5 bis 60 | bei 100°C/70 h |
| d) | 8 bis 70 | bei 125°C/70 h und |
| e) | 10 bis 78 | bei 150°C/70 h |

sowie Druckspannungsrelaxationswerte im Bereich von

| | | |
|---|---|---|
| f) | 2 bis 8,6 | bei 23°C/168 h. |

Darüber hinaus besitzen die erfindungsgemäßen schwefelvernetzten Vinylpolybutadiene noch zusätzlich folgende physikalische Eigenschaften:
Bruchdehnung: 400 % bis 800 % bei 23°C
Reißfestigkeit: 10 MPa bis 16 MPa bei 23°C.

Zur Herstellung der erfindungsgemäßen schwefelvernetzten hydrierten Vinylpolybutadiene dienen hydrierte Vinylpolybutadiene wie sie in DE 10 324 304 A1 in allgemeiner Form beschrieben werden. Um das sehr gute Rückverformungsverhalten der erfindungsgemäß vernetzten hydrierten Vinylpolybutadiene in einem weiten Temperaturbereich zu erreichen, werden zur Vernetzung spezielle hydrierte Vinylpolybutadiene ausgewählt, die ein bestimmtes Eigenschaftsprofil besitzen, wie Mooney-Werte (ML 1+4/125°C) von 40 bis 150 Mooney-Einheiten, Hydriergrade von 70 bis 100 % und Schmelzenthalpien im Bereich von 0 bis 10 J/g.

Bevorzugt werden hydrierte Vinylpolybutadiene ausgewählt mit Mooney-Werten im Bereich von 60 bis 140 Mooney-Einheiten, Hydriergraden von 80 bis 100 % und Schmelzenthalpien von 0 bis 5 J/g.

Die auszuwählenden hydrierten Vinylpolybutadiene für die erfindungsgemäße Schwefelvernetzung können ebenfalls hergestellt werden nach den in der genannten deutschen Offenlegungsschrift beschriebenen Herstellungsverfahren. So ist es beispielsweise möglich, die als Ausgangsprodukte einzusetzenden hydrierten Vinylpolybutadiene herzustellen durch anionische Polymerisation von Butadien mit Butyllithium oder sec. Butyllithium in Gegenwart von Benzol, technischen Hexangemischen oder Cyclohexan als Lösungsmittel unter Einstellung des geforderten Vinylgehalts mittels Additiven wie Tetramethylethylendiamin, Dimethoxyethan, Butoxyethoxyethan, THF etc. bei Temperaturen von 20°C bis 150°C. Die Hydrierung der so erhaltenen Vinylpolybutadiene kann mittels eines Katalysators auf Basis von Ni(Oct)₂/Tnethylaluminium, Co(Oct)2/Triethylalunminm, Dicyclopentadienyltitandichlorid/ BuLi bzw. Dicyclopentadienyltitandichlorid /Triethylaluminium, Tris(triphenylposphin)rhodium(I)-chlorid (Wilkinson-Katalysator) etc. in Gegenwart der zuvor genannten Lösungsmittel erfolgen. Bevorzugt erfolgt die Hydrierung im gleichen Lösungsmittel wie die Herstellung des Vinylpolybutadiens ohne Isolation des Vinylpolybutadiens (in-situ-Hydrierung). Vor der Isolierung des hydrierten Polymeren aus der Lösung wird der Hydrierkatalysator entfernt. Außerdem wird vor der Aufarbeitung ein Alterungsschutzmittel zugesetzt.

Wie zuvor erwähnt, werden die speziell ausgewählten hydrierten Vinylpolybutadiene mit Hilfe von vernetzungsaktiven Zusätzen insbesondere von Schwefel, Peroxiden, Azoverbindungen sowie durch hochenergiereiche Strahlung vernetzt. Die Vernetzung mittels Schwefel und Beschleunigern ist dem Fachmann bekannt und beispielsweise in allgemeiner Form beschrieben in W. Hofmann, Vulkanisation & Vulkanisationsmittel, Hrsg. Bayer AG Leverkusen (1965), Th. Kempermann, in: Bayer-Mitteilungen für die Gummi-Industrie 50, 29-38 (1978), 51, 17-33 (1979), 52, 13-23 (1980), L H. Davis, A. B. Sullivan, A. Y. Coran, Rubber Chemistry and Technology 60, 125 (1987), sowie R. Casper, J. Witte und G. Kuth in Ullmann's Encyklopädie der technischen Chemie, 4. Aufl. Band 13, S. 640-644 (1977). In den genannten Abhandlungen werden auch die für die Schwefelvulkanisation der hydrierten Vinylpolybutadiene geeigneten Vernetzer und Beschleuniger beschrieben.

Für die Vernetzung kann Schwefel in elementarer löslicher oder unlöslicher Form sowie in Form von Schwefelspendern eingesetzt werden.

Als Schwefelspender kommen beispielsweise in Frage: Dimorpholyldisulfid, 2-Morpholinodithiobenzothiazol, Caprolactamdisulfid, Dipentamethylenthiuramtetrasulfid, Tetramethylthiuramdisulfid.

Bei der Schwefelvulkanisation der hydrierten Vinylpolybutadiene ist es empfehlenswert, neben dem Schwefel oder den Schwefelspendern noch geeignete Beschleuniger zuzusetzen, um ein technisch vernünftiges Vulkanisationsverhalten bzw. technisch hinreichende physikalische Eigenschaften der Vulkanisate zu erhalten. Grundsätzlich kann die Vernetzung aber auch mit Schwefel oder Schwefelspendern allein erfolgen. Umgekehrt kann die Vernetzung der hydrierten Vinylpolybutadiene aber auch mit einer Reihe von Beschleunigern bzw. Beschleunigerkombinationen allein und ohne Zusatz von elementarem Schwefel oder Schwefelspendern durchgeführt werden.

Für die beschleunigte Schwefelvernetzung der hydrierten Vinylpolybutadiene können Beschleuniger und Vernetzungsmittel auf der Basis von: Dithiocarbamaten, Thiuramen, Thiazolen, Sulfenamiden, Xanthogenaten, Guanidinbeschleunigern, Dithiophosphaten und Caprolactamen eingesetzt werden.

Als Dithiocarbamate können beispielsweise eingesetzt werden: Zinkdimethyldithiocarbamat, Zinkdiethyldithiocarbamat, Zinkdibutyldithiocarbamat, Zinkethylphenyldithiocarbamat, Zinkdibenzyldithiocarbamat, Zinkpentamethylendithiöcarbamat, Tellurdiethyldithiocarbamat, Nickeldibutyldithiocarbamat, Nickeldimethyldithiocarbamat, Zinkdüsononyldithiocarbamat,
als Thiurame zum Beispiel: Tetramethylthiuramdisulfid, Tetramethylthiuratnmonosulfid, Dimethyldiphenylthiuramdisulfid, Tetrabenzylthiuramdisulfid, Dipentamethylenthiuramtetrasulfid, Tetraethylthiuramdisulfid,
als Thiazole zum Beispiel: 2-Mercaptobenzothiazol, Dibenzothiazyldisulfid, Zinkmercaptobenzothiäzol, Benzothiazyl-dicyclohexysulfenamid, N-tert.-Butyl-2-benzothiazolsulfenimid, Kupfer-2-mercaptobenzothiazol,
als Sulfenamid-Beschleuniger zum Beispiel: N-Cyclohexyl-benzothiazylsulfenamid, N-tert.-Butyl-2-benzthiazylsulfenamid, Benzothiazyl-2-sulfenmorpholid, N-Dicyclohexyl-2-benzthiazyl-sulfenamid, 2-Morpholinbenzothiazylsulfenamid, 2-Morpholindithiobenzothiazol, N-Oxy-diethylenthiocarbamyl-N-tert.butylsulfenamid, Oxydiethylenthiocarbamyl-N-oxydethylensulfenamid,
als Xanthogenatbeschleuniger zum Beispiel Natriumdibutylxanthogenat, Zinkisopropyldibutylxanthogenat, Zinkdibutylxanthogenat,
als Guanidinbeschleuniger zum Beispiel: Diphenylguanidin, Di-o-tolylguanidin, o-Tolylbiguanid,
als Dithiophosphate, beispielsweise Zinkdialkydithiophosphate (Kettenlänge Alkylreste C₂ bis C₁₆), Kupferdialkyldithiophosphate (Kettenlänge Alkylreste C₂ bis C₁₆), Dithiophoshorylpolysulfid,
als Caprolactame, wie beispielsweise Dithio-bis-caprolactam,
als weitere Beschleuniger beispielsweise: Zinkdiamindiisocyanat, Hexamethylentetramin, 1,3-Bis(citraconimidomethyl)benzol sowie zyklische Disulfane.

Die genannten Beschleuniger und Vernetzungsmittel können sowohl einzeln als auch in Mischungen eingesetzt werden. Bevorzugt werden folgende Substanzen für die Vernetzung der hydrierten Vinylpolybutadiene eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphate, Dimorpholyldisulfid, Tellurdiethyldithiocarbamat, Nickeldibutyldithiocarbamat, Zinkdibutyldithiocarbamat, Zinkdimethyldithiocarbamat, Dithio-bis-caprolactam.

Die Vernetzungsmittel und Beschleuniger können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvernetzung der hydrierten Vinylpolybutadiene ist es fast immer notwendig, zusätzlich zu den Vulkanisationsbeschleunigern oder Vemetzungsmitteln auch anorganische bzw. organische Aktivatoren mitzuverwenden, beispielsweise: Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Das Vulkanisationsverhalten der erfindungsgemäßen Schwefelvernetzung der hydrierten Vinylpolybutadiene kann auch - wo technisch notwendig oder gewünscht - durch geeignete Retarder beeinflusst werden. Dazu kommen beispielsweise folgende Substanzen in Frage: N-(Cyclohexylthio)phthalimid, Phthalsäureanhydrid, N-Phenyl-N-(trichloro-methyl-sulfenyl)-benzyl-sulfenamid, Benzoesäure und Salizylsäure.

Aktivatoren und Retarder können in Mengen von ca. 0,1 bis 12 phr, bevorzugt 0,2 bis 8 phr, besonders bevorzugt in Mengen von 0,5 bis 5 phr eingesetzt werden.

Darüber hinaus können bei der erfindungsgemäßen Schwefelvernetzung der hydrierten Vinylpolybutadiene noch weitere bekannte Hilfsmittel und Additive eingesetzt werden. Zu erwähnen sind beispielsweise Alterungsschutzmittel, Füllstoffe, Füllstoffaktivatoren, Weichmacher oder Formtrennmittel.

Schwefelvulkanisate aus hydrierten Vinylpolybutadienen können durch Zusatz von Alterungsschutzmitteln zusätzlich gegen unterschiedliche Umwelteinflüsse, wie beispielsweise Einwirkung von Hitze, LTV-Licht, Ozon und dynamische Ermüdung geschützt werden.

Als Alterungsschutzmittel kommen insbesondere folgende in Frage:
p-Phenylendiamine, wie z. B. N-Isopropyl-N'-phenyl-p-phenylendiamin, N-(1,3-Dimethylbutyl)-N'-phenyl-p-phenylendiamin und N,N'-Di(1,4-dimethylpentyl)-p-phenylendiamin,
sekundäre aromatische Amine, wie z. B. oligomerisiertes 2,2,4-Trimethyl-1,2-dihydro-chinolin (TMQ), styrolisiertes Diphenylamin (DDA), octyliertes Diphenylamin (OCD) und Phenyl-αnaphtylamin (PAN),

Mercapto-Verbindungen, beispielsweise 2-Mercaptobenzimidazol, 4- und 5-Methylmercaptobenzimidazol (MB2) oder deren Zinksalze (ZMB2).

Daneben können auch die bekannten phenolischen Alterungsschutzmittel eingesetzt werden, wie sterisch gehinderte Phenole. Es können auch Kombinationen der genannten Alterungsschutzmittel eingesetzt werden.

Die Alterungsschutzmittel werden üblicherweise in Mengen von ca. 0,1 bis 8 phr, bevorzugt 0,3 bis 5 phr, bezogen auf die Gesamtmenge Polymer, eingesetzt.

Als Formtrennmittel kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0,2 bis 10 phr, bevorzugt 0,5 bis 5 phr , bezogen auf die Gesamtmenge Polymer eingesetzt.

Als Füllstoffe können u.a. Ruß, Kieselsäure, Caliciumcarbonat, Bariumsulfat, Zinkoxid, Magnesiumoxid, Aluminiumoxid, Eisenoxid, Diatomeenerde, Korkmehl und/oder Silikate eingesetzt werden. Die Auswahl der Füllstoffe richtet sich nach dem einzustellenden Eigenschaftsprofil der Vulkanisate. Sollten die Vulkanisate z.B. flammfest ausgerüstet werden, empfiehlt sich der Einsatz von entsprechenden Hydroxiden, wie Aluminiumhydroxid, Magnesiumhydroxid, Calciumhydroxid sowie von wasserhaltigen Salzen, insbesondere von Salzen, die Wasser als Kristallwasser enthalten.

Die Füllstoffe werden im Allgemeinen in Mengen von ca. 1 bis 150 phr eingesetzt. Selbstverständlich ist es möglich, die unterschiedlichsten Füllstoffe in Mischung untereinander einzusetzen.

Außerdem können, gemeinsam mit den Füllstoffen, zur Erzielung bestimmter Produkt- und/oder Vulkanisationseigenschaften Füllstoffaktivatoren zugesetzt werden. Die Zugabe der Füllstoffaktivatoren kann während der Mischungsherstellung durchgeführt werden, es kann aber auch eine Behandlung des Füllstoffes mit Füllstoffaktivator erfolgen, bevor dieser der Kautschukmischung zugesetzt wird. Hierzu können organische Silane, wie beispielsweise Bis(triethoxysilylpropyl)polysulfan, Vinyltrimethoxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan sowie (Octadecyl)methyldimethoxysilan eingesetzt werden. Weitere Füllstoffaktivatoren stellen zum Beispiel grenzflächenaktive Substanzen wie Triethanolamin und Ethylenglycole mit Molekulargewichten von 74 bis 10000 g/mol dar.

Darüber hinaus können die Vulkanisate durch den Zusatz von Festigkeitsträgern wie Glasfasern, Fasern aus aliphatischen und aromatischen Polyamiden, , z.B. Aranüd^{®}, Polyester-Fasern, Polyvinylalkohol-Fasern, Cellulose-Fasern, Naturfasern wie z. B. Baumwolle oder Holzfasern sowie Gewebe aus Baumwolle, Polyester, Polyamid, Glas- und Stahlcord verstärkt werden. Diese Festigkeitsträger oder Kurzfasern müssen ggf. vor ihrer Verwendung haftungsfreündlich ausgerüstet (z. B. durch RFL-Dip) werden, um einen festen Verbund mit dem Elastomer zu ermöglichen.

Als Weichmacher können die üblichen Mineralöle in Mengen von bis zu 100 phr eingesetzt werden.

Selbstverständlich ist es möglich, noch weitere Zusatz- und Hilfsstoffe den Vulkanisaten zuzugeben, falls dies für die Einstellung des Eigenschaftsprofils der erfindungsgemäß vernetzten hydrierten Vinylpolybutadiene erforderlich sein sollte.

Weiterhin ist es möglich, mit Hilfe der erfindungsgemäßen Vulkanisate Verbundkörper mit Stahl, Thermoplasten und Duroplasten herzustellen. Die Herstelllung des Verbunds erfolgt entweder während der Vulkanisation, ggf. unter Einsatz eines geeigneten Haftmittelsystems oder nach vorheriger Aktivierung (z. B. Ätzung, Plasmaaktivierung) des Trägers sowie durch Verklebung nach der Vulkanisation.

Das Mischen der erfindungsgemäß einzusetzenden hydrierten Vinylpolybutadiene mit den zuvor genannten Zusätzen erfolgt vor der Vulkanisation in den üblichen Aggregaten, wie Innenmischer, Extrudern und Walzen.

Die Verarbeitung der Mischung kann in bekannter Weise, wie Kalandrieren, Transfermoulding, Extrudieren und Spritzgießen durchgeführt werden. Die Temperatur bei der Verarbeitung ist so zu wählen, das keine vorzeitige Vulkanisation stattfindet. Hierzu können entsprechende Vorversuche durchgeführt werden.

Die optimale Temperatur zur Durchführung der Vulkanisation ist naturgemäß von der Reaktivität des eingesetzten Vernetzungssystems abhängig und kann im vorliegenden Fall bei Temperaturen von Raumtemperatur (ca. 20°C) bis ca. 220°C erfolgen, gegebenenfalls unter erhöhtem Druck. Die Vemetzungszeiten betragen im Allgemeinen 20 Sekunden bis 60 Minuten, bevorzugt 30 Sekunden bis 30 Minuten.

Die Vulkanisationsreaktion selbst kann in üblicher Weise durchgeführt werden, in Vulkanisationspressen, Autoklaven, in Gegenwart von Heißluft, Mikrowellen und anderer energiereicher Strahlung (z. B. UV- oder IR-Strahlung) sowie im Salzbad.

Zur Erzielung bestimmter Produkteigenschaften oder um die Vulkanisation zu vervollständigen, kann eine Nachtemperung erforderlich sein. In diesen Fällen wird eine Nachtemperung bei Temperaturen im Bereich von 60°C bis 220°C in einem Zeitraum von ca. 2 Minuten bis 24 h gegebenenfalls unter reduziertem Druck durchgeführt.

### Beispiele

### 1. Für Untersuchungen eingesetzte Hydrierte Vinylpolybutadien-Produkte (HVIBR) sowie EPDM-Vergleichsprodukte

Die Ausgangsprodukte für die hydrierten Vinylpolybutadiene (Vinylpolybutadien-Feedstocks), die für die weiteren Untersuchungen eingesetzt wurden, wurden nach der Lehre von DE 10324304 A1 hergestellt.

Die Basiseigenschaften der hydrierten Vinylpolybutadien-Produkte, die bei den weiteren Versuchen eingesetzt wurden, sind in nachfolgender Tabelle 1.1. zusammengefasst:

**Tabelle 1.1: Basiseigenschaften der hydrierten HVIBR-Typen**

| **Kautschuk** | **ML1+4 / 125°C [ME]** | **Vinylgehalt (im Feedstock) [%]** | **Hydriergrad [%]** | **DH [J/g]** | **Tg [°C]** | **Ethylen-gehalt [%]** | **ENB-Gehalt [%]** |
|---|---|---|---|---|---|---|---|
| **HVIBR 96** | 90 | 49,3 | 96,2 | 0 | -61 | - | - |
| **HVIBR 94** | 136 | 47,5 | 94,1 | 2,7 | -60 | - | - |
| **HVIBR 85** | 78 | 50 | 85 | 0 | -62 | - | - |

Die Compound- und Vulkanisateigenschaften der hydriertem Vinylpolybutadien werden mit denen etablierter EPDM-Kautschuke verglichen. Die EPDM-Typen Buna® EP G 5450 und Buna® EP G 3440 sind Handelsprodukte der Lanxess Deutschland GmbH. Wichtige Basisdaten dieser EPDM-Typen sind in beiliegender Tabelle 1.2. zusammengefasst.

**Tabelle 1.2: Basiseigenschaften der EPDM-Vergleichsprodukte**

| **Kautschuk** | **ML1+4/ 125°C [ME]** | **Vinylgehalt [%]** | **Hydriergrad [%]** | **DH [J/g]** | **Tg [°C]** | **Ethylengehalt [%]** | **ENB-Gehalt [%]** |
|---|---|---|---|---|---|---|---|
| **Buna**® **EPG 5450** | 46 | - | - | 0,56 | -53,3 | 52 | 4,3 |
| **Buna**® **EP G 3440** | 28 | - | - | 0 | -52,2 | 48 | 4,1 |

### 2. Herstellung, Vulkanisation und Charakterisierung der Kautschukmischungen

Drei hydrierte Vinylpolybutadien-Tpen werden mit zwei EPDM-Typen anhand der Eigenschaften der unvulkansierten und der vulkanisierten Compounds verglichen.

### 2.1. Herstellung der Kautschukmischungen

Für die Herstellung der Kautschukmischungen wurde ein Innenmischer mit 1.5 I Inhalt und mit "intermeshing rotor geometry" (GK1.5E von Werner & Pfleiderer) verwendet. Zuerst wurden jeweils der Kautschuk (HVIBR oder EPDM) in den Mischer gegeben. Nach 30 s wurden ale weiteren Komponenten außer dem Schwefel und den Beschleunigern zugegeben und bei konstanter Rotordrehzahl bei 40 U/min gemischt. Nach einer Mischzeit von 4 min wurde die Mischung ausgeworfen und an der Luft auf Raumtemperatur abgekühlt. Anschließend wurden der Schwefel und die Beschleuniger auf der Walze bei 40°C eingemischt.

### 2.1: Zusammensetzung der Kautschukmischungen

| **Kautschukmischung-Nr. :** | | **2.1.1** | **2.1.2** | **2.1.3** | **2.1.4** | **2.1.5** |
|---|---|---|---|---|---|---|
| HVIBR 96 | [phr] | 100 | | | | |
| HVIBR 94 | [phr] | | 100 | | | |
| HVIBR 85 | [phr] | | | 100 | | |
| Buna EP G 5450 | [phr] | | | | 100 | |
| Buna EP G 3440 | [phr] | | | | | 100 |
| Corax® N 550 ¹⁾ | [phr] | 80 | 80 | 80 | 80 | 80 |
| Sunpar® 2280 ²⁾ | [phr] | 50 | 50 | 50 | 50 | 50 |
| Vulkanox® HS ³⁾ | [phr] | 1 | 1 | 1 | 1 | 1 |
| Polyglykol® 4000 S⁴⁾ | [phr] | 1 | 1 | 1 | 1 | 1 |
| Zinkoxid⁵⁾ | [phr] | 5 | 5 | 5 | 5 | 5 |
| Stearinsäure⁶⁾ | [phr] | 1 | 1 | 1 | 1 | 1 |
| MBT⁷⁾ | [phr] | 0,5 | 0,5 | 0,5 | 0,5 | 0,5 |
| TMTD⁸⁾ | [phr] | 1 | 1 | 1 | 1 | 1 |
| Schwefel⁹⁾ | [phr] | 1,5 | 1,5 | 1,5 | 1,5 | 1,5 |

| | | | | | | |
|---|---|---|---|---|---|---|
| 1) Spezifizierter Ruß der Degussa AG 2) Mineralölweichmacher der Sunoco Rubber & Chemical 3) 2,2,4-Tetramethyl-1,2-dihydrochinolin, polymerisiert (Vulkanox® HS der Lanxess Deutschland GmbH 4) Polyethylenglykol der Clariant 5) Zinkweiss Rotsiegel der Grillo Zinkoxid GmbH 6) Edenor® C18 98-100 der Cognis Deutschland GmbH 7) 2-Mercaptobenzthiazol (Vulkacit® Merkapto/C der Lanxess Deutschland GmbH) 8) Tetramethylthiuramdisulfid (Vulkacit® Thiuram/C der Lanxess Deutschland GmbH) 9) Mahlschwefel Chancel 90/95° der Solvay Deutschland GmbH | | | | | | |

An den unvulkanisierten Kautschukmischungen wurden folgende Werte bestimmt:

### 2.2: Eigenschaften der Kautschukmischungen

| **Kautschukmischung-Nr.:** | | **2.2.1** | **2.2..2** | **2.2.3** | **2.2.4** | **2.2.5** |
|---|---|---|---|---|---|---|
| Mooneyviskosität (ML1+4/100°C) nach ASTM D 1646 | [ME] | 71 | 74 | 68 | 56 | 38 |
| Mooneyrelaxation (MR) nach ISO 289, Teil 4 | [%] | 3,7 | 9,3 | 6,3 | 4,8 | 4,7 |

Das Vulkanisationsverhalten der Mischungen wurde nach ASTM D 5289 bei 160°C und einer Prüfzeit von 30 Minuten mit Hilfe des Moving Die Rheometers MDR2000 der Firma Alpha Technology untersucht. Auf diese Weise wurden die charakteristische Vulkameterwerte Fₐ, Fₘₐₓ, F_{max.}-Fₐ, t₁₀, t₅₀, t₉₀ und t₉₅ bestimmt.

### 2.3: Vulkanisationsverhalten der Kautschukmischungen

| **Kautschukmischung-Nr.:** | | **2.3.1** | **2.3.2** | **2.3.3** | **2.3.4** | **2.3.5** |
|---|---|---|---|---|---|---|
| Fₐ | [dNm] | 1,87 | 2,18 | 1,89 | 1,2 | 0,76 |
| Fₘₐₓ | [dNm] | 16,91 | 14,06 | 17,07 | 19,00 | 17,23 |
| Fₘₐₓ - Fₐ | [dNm] | 15,04 | 11,88 | 15,18 | 17,80 | 16,47 |
| t₁₀ | [min] | 1,09 | 0,90 | 0,84 | 1,50 | 1,61 |
| t₅₀ | [min] | 2,22 | 1,59 | 1,35 | 3,00 | 3,59 |
| t₉₀ | [min] | 8,73 | 5,73 | 4,22 | 11,3 | 12,53 |
| t₉₅ | [min] | 12,65 | 8,54 | 7,49 | 15,67 | 16,68 |

Nach DIN 53 529, Teil 3 bedeuten:
- Fₐ:: Vulkameteranzeige im Minimum der Vemetzungsisotherme
- Fₘₐₓ:: Maximum der Vulkameteranzeige
- Fₘₐₓ - Fₐ:: Differenz der Vulkameteranzeigen zwischen Maximum und Minimum
- t₁₀:: Zeitpunkt, bei dem 10% des Endumsatzes erreicht sind
- t₅₀:: Zeitpunkt, bei dem 50% des Endumsatzes erreicht sind
- t₉₀:: Zeitpunkt, bei dem 90% des Endumsatzes erreicht sind
- t₉₅:: Zeitpunkt, bei dem 95% des Endumsatzes erreicht sind

Die Mischungen wurden in einer Plattenpresse unter einem Druck von 170 bar bei 160°C gemäß den in Tab.2.3 angegebenen t₉₅ -Zeiten vulkanisiert.

An den ungealterten Vulkanisaten wurden folgende Prüfwerte bei 23°C bzw. 70°C bestimmt.

### 2.4: Vulkanisateigenschaften der Kautschukmischungen

| **Kautschukniischung-Nr. :** | | **2.4.1** | **2.4.2** | **2.4.3** | **2.4.4** | **2.4.5** |
|---|---|---|---|---|---|---|
| Shore A Härte bei 23°C / DIN 53505 | [ShA] | 61 | 58 | 61 | 61 | 60 |
| Shore A Härte bei 70°C / DIN 53505 | [ShA] | 60 | 57 | 59 | 59 | 59 |
| Rückprallelastizität bei 23°C nach DIN 53512 | [%] | 49,0 | 50,5 | 52,0 | 51,8 | 58,0 |
| Rückprallelastizität bei 70°C nach DIN 53512 | [%] | 62,3 | 62,0 | 65,0 | 61,7 | 58,5 |
| Spannungswert bei 25% Dehnung (σ₂₅) 23°C /DIN 53504 | [MPa] | 0,78 | 0,73 | 0,80 | 0,83 | 0,77 |
| Spannungswert bei 100% Dehnung (σ₁₀₀) 23°C / DIN 53504 | [MPa] | 2,8 | 2,6 | 2,9 | 2,4 | 2,4 |
| Spannungswert bei 300% Dehnung (σ₃₀₀) 23°C / DIN 53504 | [MPa] | 8,0 | 9,2 | 8,7 | 7,8 | 7,1 |
| Zugfestigkeit (σₘₐₓ) 23°C / DIN 53504 | [MPa] | 11,9 | 15,2 | 11,0 | 14,7 | 14,0 |
| Bruchdehnung (ε_{b}) 23°C / DIN 53504 | [%] | 479 | 532 | 404 | 529 | 566 |
| Druckverformungsrest nach 70 h / 23°C (DIN 53517 A) | [%] | 3,5 | 4,0 | 3,9 | 4,7 | 6,4 |
| Druckverformungsrest nach 70 h /70°C (DIN 53517 A) | [%] | 14,0 | 14,9 | 18,1 | 26,9 | 31,6 |
| Druckverformungsrest nach 70 h/100°C (DIN 53517 A) | [%] | 55,1 | 48,3 | 50,8 | 70,1 | 76,8 |
| Druckverformungsrest nach 70 h/125°C (DIN 53517 A) | [%] | 63,9 | 60,6 | 54,3 | 79,8 | 86,7 |
| Druckverformungsrest nach 70 h/150°C (DIN 53517 A) | [%] | 71,6 | 69,2 | 62,7 | 84,7 | 91,5 |
| Druckspannungsrelaxation nach 168 h bei 23°C (DIN 53537) | [%] | 7,5 | 8,3 | 8,5 | 8,8 | 14,2 |

Die Bestimmung der physikalischen Parameter erfolgte nach den einschlägigen DIN-, ISO- bzw. ASTM-Vorschriften. Ergänzend wird auf Kleemann, Weber, Formeln und Tabellen für die Elastomerverarbeitung, Dr. Gupta Verlag, 1994 hingewiesen.

### 3. Diskussion der Ergebnisse

Die erfindungsgemäßen Beispiele zeigen, dass im Fall der schwefelvulkanisierten Kautschukmischungen aus hydriertem Vinylpolybutadien, die Werte für den Druckverformungsrest über einen breiten Temperaturbereich sowie die Werte für die Druckspannungsrelaxation günstiger liegen, als bei den Vergleichsbeispielen. Gleichzeitig liegen die anderen mechanischen Kenndaten der HVIBR-Vulkanisate größenordnungsmäßig auf etwa gleichem Niveau wie die der EPDM-Vergleichsbeispiele.

## Patentansprüche

1. Schwefelvernetzte hydrierte Vinylpolybutadiene, **dadurch gekennzeichnet, dass** sie Compression-Set Werte im Bereich von
| | | |
|---|---|---|
| a) | 1 bis 4,3 | bei 23°C/70 h, |
| b) | 2 bis 22 | bei 70°C/70 h |
| c) | 5 bis 60 | bei 100°C/70 h |
| d) | 8 bis 70 | bei 125°C/70 h und |
| e) | 10 bis 78 | bei 150°C/70 h |
sowie Druckspannungsrelaxationswerte im Bereich von
| | | |
|---|---|---|
| f) | 2 bis 8,6 | bei 23°C/168 h aufweisen. |

2. Verwendung der schwefelvernetzten hydrierten Vinylpolybutadiene nach Anspruch 1 zur Herstellung von technischen Gummiartikeln.

3. Verwendung der schwefelvernetzten hydrierten Vinylpolybutadiene nach Anspruch 1 zur Herstellung von dynamisch belasteten Reifenbauteilen

4. Verwendung der schwefelvernetzten hydrierten Vinylpolybutadiene nach Anspruch 1 zur Herstellung von Förderbändern, Schläuchen, Dichtungen aller Art, Profilen, Feder- und Faltenbälgen, Dichtmanschetten, Ventilen, Schutzkappen, Lagern und Dämpfungselementen, Kupplungen, Antriebsriemen, Beschichtungen, Platten und Belägen, Sohlen, Kabelummantelungen, Membranen sowie Verbundkörpern aus Gummi/ Metall, Gummi/ Kunststoff und Gummi/ Textil..

## Claims

1. Sulphur-crosslinked hydrogenated vinylpolybutadienes, **characterized in that** they have compression set values in the range from
| | | |
|---|---|---|
| a) | 1 to 4.3 | at 23°C/70 h, |
| b) | 2 to 22 | at 70°C/70 h |
| c) | 5 to 60 | at 100°C/70 h |
| d) | 8 to 70 | at 125°C/70 h and |
| e) | 10 to 78 | at 150°C/70 h |
and compressive stress relaxation values in the range from
| | | |
|---|---|---|
| f) | 2 to 8.6 | at 23°C/168 h. |

2. Use of the sulphur-crosslinked hydrogenated vinylpolybutadienes according to Claim 1 for the production of technical rubber items.

3. Use of the sulphur-crosslinked hydrogenated vinylpolybutadienes according to Claim 1 for the production of dynamically loaded tyre components.

4. Use of the sulphur-crosslinked hydrogenated vinylpolybutadienes according to Claim 1 for the production of conveyor belts, hoses, gaskets of any type, profiles, bellows, sealing collars, valves, protective caps, bearings and dampers, couplings, drive belts, coatings, sheets and coverings, soles, cable sheathing, membranes and composites composed of rubber/metal, rubber/plastic and rubber/textile.

## Revendications

1. Vinylpolybutadiènes hydrogénés réticulés par du soufre, **caractérisés en ce qu'**ils présentent des valeurs de déformation permanente en compression de l'ordre de :
| | | |
|---|---|---|
| a) | 1 à 43 | à 23 °C/70 h, |
| b) | 2 à 22 | à 70 °C/70 h, |
| c) | 5 à 60 | à 100 °C/70 h, |
| d) | 8 à 70 | à 125 °C/70 et |
| e) | 10 à 78 | à 150 °C/70 h, |
ainsi que des valeurs de relaxation de contrainte en compression de l'ordre de :
| | | |
|---|---|---|
| f) | 2 à 8,6 | à 23 °C/168 h. |

2. Utilisation des vinylpolybutadiènes hydrogénés réticulés par du soufre suivant la revendication 1 pour la production d'articles techniques en caoutchouc.

3. Utilisation des vinylpolybutadiènes hydrogénés réticulés par du soufre suivant la revendication 1 pour la production de composants de pneus à charge dynamique.

4. Utilisation des vinylpolybutadiènes hydrogénés réticulés par du soufre suivant la revendication 1 pour la production de tapis roulants, de tuyaux flexibles, de joints de tous types, de profilés, de soufflets ressort et accordéon, de colliers d'étanchéité, de vannes, de couvercles de protection, de paliers et d'éléments amortisseurs, de raccords, de courroies de transmission, de revêtements, de panneaux et de garnitures, de semelles, de gaines de câbles, de membranes et de corps composites à base de caoutchouc/métal, de caoutchouc/plastique et de caoutchouc/textile.
